# EUROPÄISCHE PATENTSCHRIFT

(11) **EP 2 146 352 B1**
(45) Veröffentlichungstag und Bekanntmachung des Hinweises auf die Patenterteilung: **08.01.2014**
(21) Anmeldenummer: 09160836.4
(22) Anmeldetag: 20.05.2009
(51) Int. Cl.: G21C 19/07

(54) **Lagergestell zum Lagern nuklearer Brennelemente**
Storage rack for storing nuclear fuel assemblies
Râtelier de stockage pour assemblages de combustible nucléaire

(30) Priorität: 19.06.2008 EP 08158613
(43) Veröffentlichungstag der Anmeldung: 20.01.2010
(73) Patentinhaber: CCI AG, 8404 Winterthur (CH)
(72) Erfinder: Kielbowicz, Stanislaw, 8820 Wädenswil (CH)
(74) Vertreter: Schmidtchen, Jürgen Christian

(56) Entgegenhaltungen:
- EP-A- 0 385 186
- EP-A- 0 759 623
- WO-A-80/00046
- DE-A1- 2 930 237
- FR-A- 2 433 809
- US-A- 4 029 968
- US-A- 4 042 828
- US-A- 5 361 281

## Beschreibung

Die Erfindung betrifft ein Lagergestell zum Lagern nuklearer Brennelemente gemäss Oberbegriff von Anspruch 1.

Nukleare Brennelemente und insbesondere abgebrannte nukleare Brennelement werden in Lagerbecken gelagert, die mit einem Kühlmittel wie beispielsweise Wasser gefüllt sind, das zugleich als Abschirmung gegen die Strahlung der Brennelemente dient. Die abgebrannten nuklearen Brennelemente verbleiben solange im Lagerbecken, bis sie der Wiederaufbereitung oder fallweise Endlagerung zugeführt werden. Zur sicheren Lagerung der nuklearen Brennelemente wurden Lagergestelle entwickelt, wobei ein Lagerbecken meist mehrere Lagergestelle aufnehmen kann, die nebeneinander und fallweise auch übereinander angeordnet sein können.

Aus Dokument DE 29 30 237 A1 ist ein Lagergestell zur Lagerung nuklearer Brennelemente bekannt, das mehrere vertikale Schächte oder Kanäle zur Aufnahme der Brennelemente enthält, wobei die Wandungen der Kanäle aus übereinander angeordneten Blechstreifen gebildet sind. Die Blechstreifen sind an ihren unteren und oberen Rändern mit Einschnitten versehen, mittels welchen die kreuzweise ineinander gesteckten Blechstreifen gegenseitig gehalten sind. Die Blechstreifen sind zwischen einer oberen Gitterplatte und einer unteren Gitterplatte angeordnet, die durch Streben verbunden sind, und die jeweils Öffnungen zum Einführen beziehungsweise Arretieren der Brennelemente aufweisen. In dem beschriebenen Lagergestell sind die Brennelemente auf der unteren Gitterplatte abgestützt, welche somit durch das Gewicht der Kanäle und das Gewicht der Brennelemente belastet wird. Das aus DE 29 30 237 A1 bekannte Lagergestell erfordert daher eine massive, hoch belastbare untere Gitterplatte, deren Herstellung vergleichsweise aufwendig ist. Zusätzlich ist auch der Zusammenbau des Lagergestells vergleichsweise aufwendig, indem jeder nächst höhere Blechstreifen mit seinen Einschnitten in die Einschnitte der darunterliegenden Blechstreifen eingeführt werden muss.

In Dokument US 4 042 828 ist ein Lagergestell zur Lagerung nuklearer Brennelemente beschrieben, das mehrere, aneinandergereihte vertikale Umhüllungen enthält, die Kanäle zur Aufnahme der Brennelemente bilden. Die Umhüllungen, die einen quadratischen Querschnitt aufweisen, sind in einem offenen Gestellrahmen angeordnet. Die in die Umhüllungen eingesetzten Brennelemente sind während der Lagerung einzeln auf dem Boden des Lagerbeckens abgestützt.

In Dokument EP-A-0 759 623 ist ein weiteres Lagergestell zur Lagerung nuklearer Brennelemente beschrieben, das mehrere vertikale Kanäle zur Aufnahme der Brennelemente enthält. Die Kanäle, deren Wände durch Bleche aus einem Neutronen absorbierenden Werkstoff gebildet werden, sind auf einer auf dem Boden eines Lagerbeckens abstützbaren Stützkonstruktion angeordnet, die vom Gewicht der Brennelemente entlastet ist. Die Brennelemente sind jeweils direkt oder über ein Tragstück auf dem Boden des Lagerbeckens abgestützt. Entsprechend kann das Lagergestell in einer leichten Bauweise ausgeführt werden. Darüber hinaus ist es möglich, eine zweite, obere Schicht von Brennelementen vorzusehen, wodurch die Lagerkapazität wesentlich erhöht werden kann.

Die in US 4 042 828 und EP-A-0 759 623 beschriebenen Lagergestelle haben den Nachteil, dass die Abstützung der einzelnen Brennelemente auf dem Boden des Lagerbeckens nicht ideal ist, falls dieser rau oder uneben ist. Bei dem aus DE 29 30 237 A1 bekannten Lagergestell muss dagegen die untere Gitterplatte das Gewicht der Brennelemente aufnehmen. Wird die untere Gitterplatte zum Beispiel in Massivbauweise gefertigt, so ist typisch eine Materialdicke von 5 cm bis 6 cm oder mehr erforderlich. Die Herstellung einer derartigen Gitterplatte ist aufwändig, da eine vergleichsweise hohe Genauigkeit erforderlich ist und die Bearbeitung auf einer grossen und präzisen Werkzeugmaschine, beispielsweise einer Koordinaten-Fräsmaschine, erfolgen muss, die teuer ist. Die Bearbeitung einer einzigen Gitterplatte dauert bis zu einer Woche, so dass die Bearbeitungskosten entsprechend hoch sind.

EP-A-0385186 offenbart die Merkmale des Oberbegriffs des Patentanspruchs 1.

US-A-4029968 betrifft eine Lagergestellanordnung mit einer Mehrzahl von Lagergestellen, die über Seitenflächen mittels Trägerteilen aneinander gesichert sind.

WO 80/00046 A betrifft ein Gestell zum Zwischenlagern von Brennelementbündeln.

FR-A-2433809 betrifft ein Gestell zum Zwischenlagern von Brennelementbündeln in einem Wasserbassin mit einer Bodenplatte und vertikal angeordneten Vierkant-Aufnahmerohren, die fußseitig mit einem nach innen gerichteten Flansch versehen und durch Verschrauben dieses Flansches an der Bodenplatte einseitig fest eingespannt sind.

US-A-5361281 offenbart eine Lagergestellanordnung zum Lagern nuklearer Brennelemente, wobei die Lagergestellanordnung Lagergestelle aufweist, die nicht miteinander über eine gemeinsame Bodenplatte mit Durchlässen verbunden sind.

DE 2930237 betrifft ein Lagergestell für Kernreaktorbrennelemente bestehend aus mehreren Schächten zur Aufnahme der Brennelemente, wobei ein Lagergestell eine obere und untere Gitterplatte und diese verbindende Streben aufweist.

US-A-4042828 offenbart eine Lagergestellanordnung zum Lagern nuklearer Brennelemente, wobei jedes aufrecht gelagerte Brennelement auf einem Träger ruht, der auf einem Boden eines Wasserbassins angeordnet ist.

EP-A-0759623 betrifft eine Lageranordnung zum Lagern nuklearer Brennelemente mit mehreren vertikalen Kanälen zur Aufnahme der Brennelemente, wobei die Kanäle, deren Wände durch Bleche aus einem neutronenabsorbierenden Werkstoff gebildet sind, auf einer auf dem Boden eines Lagerbeckens abstützbaren Stützkonstruktion angeordnet sind.

Aufgabe der Erfindung ist es, ein Lagergestell zum Lagern nuklearer Brennelemente zur Verfügung zu stellen, das eine Auflage zum Abstützen der Brennelemente enthält, die verglichen mit der oben beschriebenen Gitterplatte wirtschaftlicher hergestellt werden kann.

Diese Aufgabe wird erfindungsgemäss durch das in Anspruch 1 definierte Lagergestell gelöst.

Das erfindungsgemässe Lagergestell zum Lagern nuklearer Brennelemente umfasst eine Kanalstruktur, die mehrere, vertikale nebeneinander angeordnete Kanäle mit Wänden zur Aufnahme der Brennelemente enthält, und eine Auflageplatte, die mit der Kanalstruktur verbunden ist. Das Lagergestell zeichnet sich dadurch aus, dass die Auflageplatte mit Durchbrüchen und/oder Schlitzen versehen ist, und dass an der Kanalstruktur vorstehende Nocken ausgebildet sind, die in oder durch die Durchbrüche beziehungsweise Schlitze der Auflageplatte gesteckt und auf der der Kanalstruktur gegenüberliegenden Seite der Auflageplatte verankert und/oder gegen Herausziehen gesichert sind.

Die Nocken können zum Beispiel auf der der Kanalstruktur gegenüberliegenden Seite der Auflageplatte vorstehen. Die Auflageplatte ist typischerweise 4 mm bis 20 mm oder 6 mm bis 16 mm dick, so dass die Bearbeitung beispielsweise mittels eines Lasers erfolgen kann. In einer vorteilhaften Ausführungsvariante sind die Nocken der Kanalstruktur mittels Verriegelungselementen verankert, beispielsweise mittels Keilen und/oder geraden oder konischen Bolzen und/oder Splinten.

In einer weiteren vorteilhaften Ausführungsvariante sind die Kanalstruktur und/oder die Wände der Kanäle aus Neutronen absorbierendem Material, wie beispielsweise einer Borlegierung oder Bor dotiertem Stahl, aufgebaut oder enthalten Neutronen absorbierendes Material. In einer weiteren vorteilhaften Ausführungsvariante ist die Kanalstruktur doppelwandig ausgeführt.

Vorteilhafterweise ist die Kanalstruktur auf der Auflageplatte abgestützt. Bei Bedarf können an der Auflageplatte Auflageelemente oder Auflagestrukturen oder Auflageflächen für die Brennelemente vorgesehen sein.

In einer vorteilhaften Ausführungsform umfasst das Lagergestell zusätzlich eines oder mehrere Stützelemente zum Abstützen des Lagergestells und/oder der Auflageplatte. Die Stützelemente können zum Beispiel an den Nocken der Kanalstruktur ausgerichtet oder zentriert sein, und/oder bei Bedarf mit Abstützungen versehen sein, beispielsweise mit verstellbaren Abstützungen in Form von Gewindebolzen, um Unebenheiten eines Lagerbeckens auszugleichen. Die Stützelemente sind fallweise aus Blech oder Blechteilen geformt, wobei die seitlichen Bleche oder Blechteile der Stützelemente vorteilhafterweise auf der der Kanalstruktur gegenüberliegenden Seite der Auflageplatte direkt unter den Wänden der Kanäle angeordnet sind. Vorteilhafterweise sind die Stützelemente an wählbaren Positionen der Auflageplatte fixierbar, beispielsweise mittels Bolzen und/oder Schrauben.

In einer weiteren vorteilhaften Ausführungsform umfasst das Lagergestell eine Grundeinheit, welche die Auflageplatte enthält, und eine oder mehrere, übereinander angeordnete Gittereinheiten, die auf der Grundeinheit abgestützt sind. Die Gittereinheiten können beispielsweise aus Blechteilen aufgebaut sei, welche die Wände der Kanäle bilden, und/oder die Grundeinheit kann bei Bedarf einen aus Blechteilen und/oder Gitterelementen gebildeten Gitterrost umfassen. Vorteilhafterweise sind die Blechteile oder Gitterelemente der Grundeinheit senkrecht zur Auflageplatte angeordnet. Im Gitterrost der Grundeinheit können bei Bedarf Kanäle oder Aussparungen zur Aufnahme der Brennelemente ausgebildet sind. In einer vorteilhaften Ausführungsvariante sind die Gittereinheiten und/oder der Gitterrost der Grundeinheit aus Neutronen absorbierendem Material aufgebaut oder enthalten Neutronen absorbierendes Material.

Das erfindungsgemässe Lagergestell hat den Vorteil, dass die Auflageplatte eine vergleichsweise geringe Materialstärke aufweisen kann, da die Auflageplatte durch die Verbindung mit der Kanalstruktur genügend versteift wird, um das Gewicht der Brennelemente aufzunehmen. Dank dieser Konstruktionsweise kann für die Auflageplatte zum Beispiel eine ähnliche oder die gleiche Materialstärke verwendet werden, wie für die Wände der Kanäle, mit dem Vorteil, dass die Auflageplatte sehr genau, schnell und praktisch verzugsfrei mittels Laser bearbeitet werden kann. Mittels der Laserbearbeitung können die Herstellungszeiten und- kosten der Auflageplatte drastisch gesenkt werden, typisch um mehr als einen Faktor 10 gegenüber dicken, massiven Gitterplatten, wie sie beispielsweise in DE 29 30 237 A1 verwendet werden. Dank der beschriebenen Konstruktionsweise ergibt sich ein vergleichsweise einfacher und Material sparender Aufbau, der eine wirtschaftliche Herstellung des Lagergestells ermöglicht. Zusätzlich gestattet die Verankerung der Kanalstruktur mittels Nocken, die in Durchbrüche und/oder Schlitze der Auflageplatte gesteckt sind, eine schweissfreie Verbindung von Kanalstruktur und Auflageplatte und vermeidet einen möglichen Verzug der Auflageplatte durch Schweissstellen. Die schweissfreie Verbindung hat zudem den Vorteil, dass die Kanalstruktur und/oder die Wände der Kanäle aus Neutronen absorbierendem Material hergestellt werden können, ohne dass auf dessen schlechte Schweisseigenschaften Rücksicht genommen werden muss. Die Verankerung der Nocken mittels Verriegelungselementen gestattet darüber hinaus einen praktisch verzugsfreien Aufbau des Lagergestells.

Die obige Beschreibung von Ausführungsformen und -varianten dient lediglich als Beispiel. Weitere vorteilhafte Ausführungen gehen aus den abhängigen Ansprüchen und der Zeichnung hervor. Darüber hinaus können im Rahmen der vorliegenden Erfindung auch einzelne Merkmale aus den beschriebenen oder gezeigten Ausführungsformen und -varianten miteinander kombiniert werden, um neue Ausführungsformen zu bilden.

Im Folgenden wird die Erfindung an Hand der Ausführungsbeispiele und an Hand der Zeichnung näher erläutert. Es zeigen
- Fig. 1: ein Ausführungsbeispiel eines Lagergestells gemäss vorliegender Erfindung,
- Fig. 2: ein zweites Ausführungsbeispiel eines Lagergestells gemäss vorliegender Erfindung,
- Fig. 2A - F: den Aufbau einer Grundeinheit gemäss dem Ausführungsbeispiel von Fig. 2,
- Fig. 3: einen Ausschnitt aus einem dritten Ausführungsbeispiel eines Lagergestells gemäss vorliegender Erfindung mit mehreren Gittereinheiten,
- Fig. 4A, B: eine Ausführungsform der Blechteile für den Aufbau von Gittereinheiten gemäss dem Ausführungsbeispiel von Fig. 3, und
- Fig. 5: einen Ausschnitt aus einem vierten Ausführungsbeispiel eines Lagergestells gemäss vorliegender Erfindung mit mehreren Gittereinheiten.

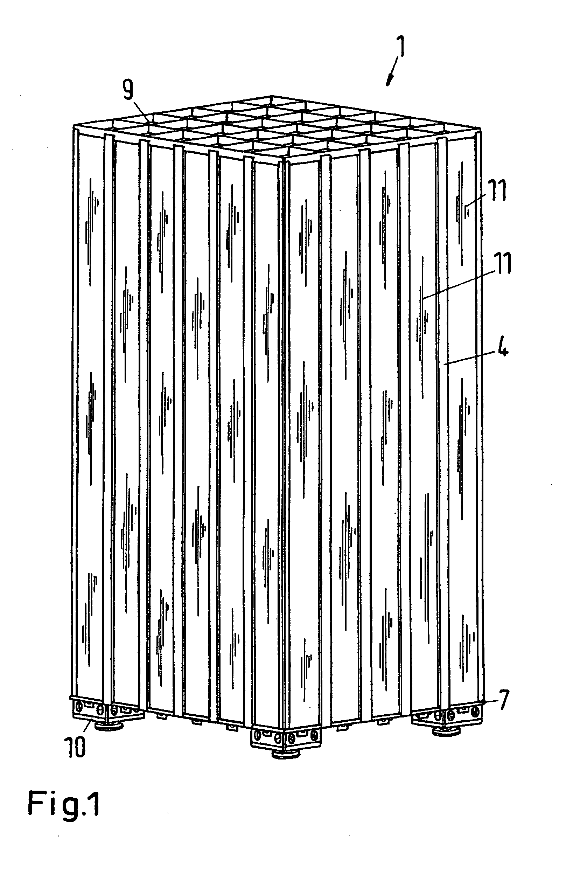

Das in Fig. 1 gezeigte Ausführungsbeispiel eines Lagergestells zum Lagern nuklearer Brennelemente gemäss vorliegender Erfindung umfasst eine Kanalstruktur, die mehrere, nebeneinander angeordnete Kanäle 9 mit Wänden 11 zur Aufnahme der Brennelemente enthält, und eine Auflageplatte 7, die mit der Kanalstruktur verbunden ist. Das Lagergestell 1 zeichnet sich dadurch aus, dass die Auflageplatte 7 mit Durchbrüchen und/oder Schlitzen versehen ist und an der Kanalstruktur und/oder den Wänden 11 der Kanäle 9 vorstehende Nocken ausgebildet sind, die in oder durch die Durchbrüche beziehungsweise Schlitze der Auflageplatte gesteckt und auf der der Kanalstruktur gegenüberliegenden Seite der Auflageplatte verankert und/oder gegen Herausziehen gesichert sind.

Weiter kann das Lagergestell 1 beispielsweise Streben 4 umfassen, die mit der Auflageplatte 7 und dem oberen Teil der Kanalstruktur verbunden sein können. Fallweise sind im oberen Teil der Kanalstruktur ein Gitterrost und/oder eine Abschlussplatte vorgesehen, mit denen die Streben 4 verbunden sein können.

Die Nocken können zum Beispiel auf der der Kanalstruktur gegenüberliegenden Seite der Auflageplatte 7 vorstehen. Die Auflageplatte ist typischerweise 4 mm bis 20 mm oder 6 mm bis 16 mm dick, so dass die Bearbeitung beispielsweise mittels eines Lasers erfolgen kann. In einer vorteilhaften Ausführungsvariante sind die Nocken der Kanalstruktur mittels Verriegelungselementen verankert, beispielsweise mittels Keilen und/oder geraden oder konischen Bolzen und/oder Splinten.

In einer weiteren vorteilhaften Ausführungsvariante sind die Kanalstruktur und/oder die Wände 11 der Kanäle 9 aus Neutronen absorbierendem Material, wie beispielsweise einer Borlegierung oder Bor dotiertem Stahl, aufgebaut oder enthalten Neutronen absorbierendes Material. In einer weiteren vorteilhaften Ausführungsvariante ist die Kanalstruktur doppelwandig ausgeführt.

Vorteilhafterweise ist die Kanalstruktur und/oder die Wände 11 der Kanäle 9 auf der Auflageplatte 7 abgestützt. Bei Bedarf können an der Auflageplatte Auflageelemente oder Auflagestrukturen oder Auflageflächen für die Brennelemente vorgesehen sein.

In einer vorteilhaften Ausführungsform umfasst das Lagergestell 1 zusätzlich eines oder mehrere Stützelemente 10 zum Abstützen des Lagergestells und/oder der Auflageplatte. Die Stützelemente können zum Beispiel an den Nocken der Kanalstruktur ausgerichtet oder zentriert sein, und/oder bei Bedarf mit Abstützungen versehen sein, beispielsweise mit verstellbaren Abstützungen in Form von Gewindebolzen, um Unebenheiten eines Lagerbeckens auszugleichen. Die Stützelemente 10 sind fallweise aus Blech oder Blechteilen geformt, wobei die seitlichen Bleche oder Blechteile der Stützelemente vorteilhafterweise auf der der Kanalstruktur gegenüberliegenden Seite der Auflageplatte direkt unter den Wänden 11 der Kanäle 9 angeordnet sind. Vorteilhafterweise sind die Stützelemente 10 an wählbaren Positionen der Auflageplatte fixierbar, beispielsweise mittels Bolzen und/oder Schrauben.

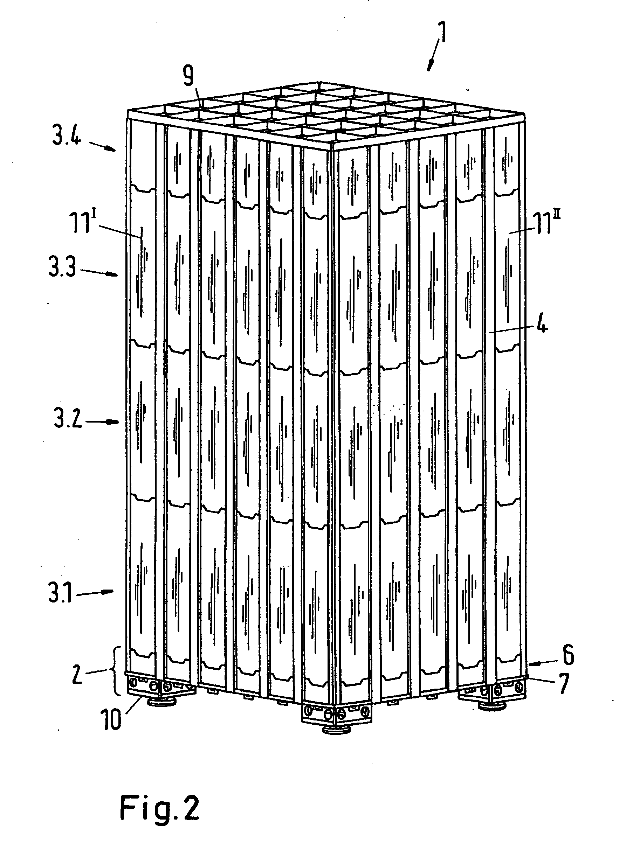

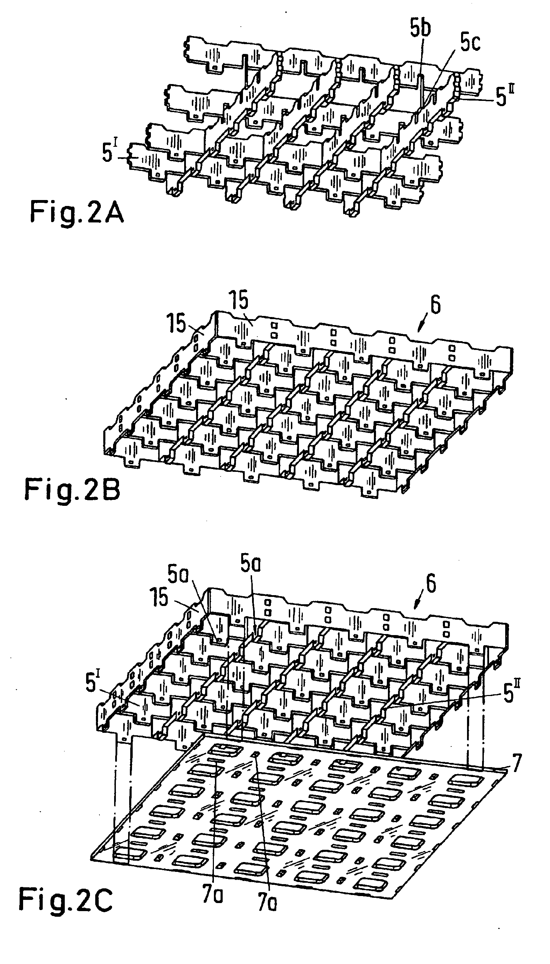

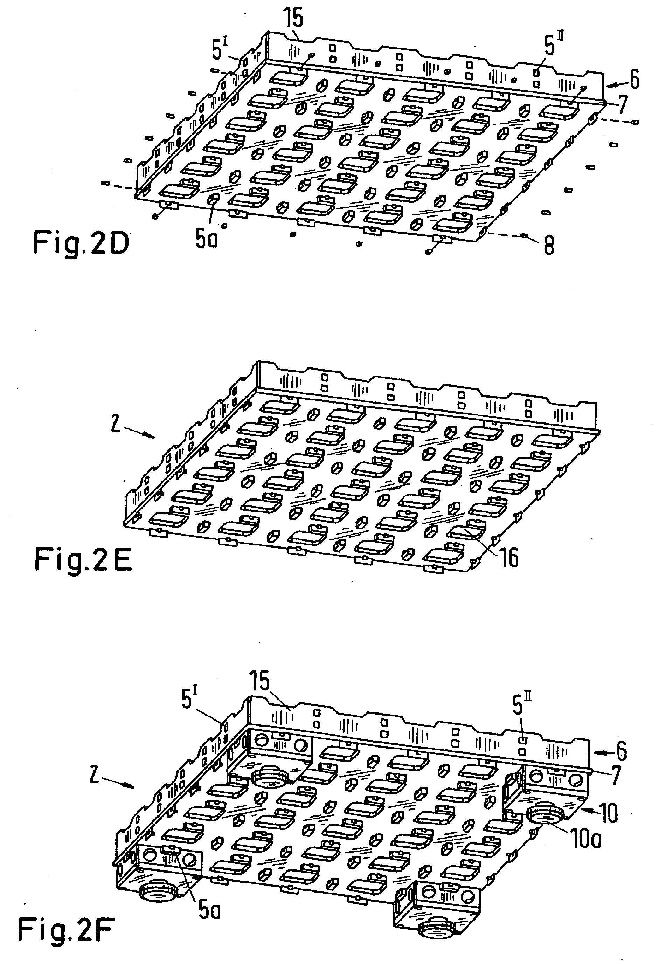

Fig. 2 zeigt ein zweites Ausführungsbeispiel eines Lagergestells zum Lagern nuklearer Brennelemente gemäss vorliegender Erfindung, das eine Kanalstruktur umfasst, die mehrere, nebeneinander angeordnete Kanäle 9 mit Wänden zur Aufnahme der Brennelemente enthält, und eine Auflageplatte 7, die mit der Kanalstruktur verbunden ist. Das in Fig. 2 gezeigte Lagergestell 1 umfasst im Einzelnen eine Grundeinheit 2 und eine oder mehrere, übereinander angeordnete Gittereinheiten 3.1 - 3.4, die auf der Grundeinheit abgestützt sind, und die aus Blechteilen 11^{I} 11^{II} aufgebaut sind, welche die Wände der Kanäle 9 bilden, und welche zum Beispiel kreuzweise angeordnet sind. Das Lagergestell 1 zeichnet sich dadurch aus, dass die Grundeinheit 2 die Auflageplatte 7 und einen aus Blechteilen 5^{I}, 5^{II} und/oder Gitterelementen gebildeten Gitterrost 6 umfasst, wobei die Auflageplatte mit Durchbrüchen 7a versehen ist und an den Blechteilen 5^{I}, 5^{II} oder an den Gitterelementen der Grundeinheit 2 vorstehende Nocken 5a ausgebildet sind, die in oder durch die Durchbrüche 7a der Auflageplatte gesteckt und auf der dem Gitterrost gegenüberliegenden Seite der Auflageplatte verankert und/oder gegen Herausziehen gesichert sind. Die Kanalstruktur wird im zweiten Ausführungsbeispiel durch die Gittereinheiten 3.1 - 3.4 und den Gitterrost 6 der Grundeinheit gebildet.

Weiter kann das Lagergestell 1 beispielsweise Streben 4 umfassen, die mit der Grundeinheit 2 und der obersten Gittereinheit und fallweise weiteren Gittereinheiten verbunden sein können.

Die Figuren 2A - F zeigen den Aufbau einer Grundeinheit gemäss Ausführungsbeispiel. In der in Fig. 2A gezeigten Ausführungsvariante umfasst die Grundeinheit 2 zwei Gruppen von jeweils parallelen Blechteilen oder -streifen 5^{I}, 5^{II}, wobei die Blechteile der ersten Gruppe sich mit den Blechteilen der zweiten Gruppe kreuzen. Die Blechteile 5^{I} der ersten Gruppe könne zum Beispiel am unteren Rand mit Einschnitten 5b versehen sein und die Blechteile 5^{II} der zweiten Gruppe am oberen Rand mit Einschnitten 5c, so dass beim Ineinanderfügen der Einschnitte 5b, 5c eine Verbindung zwischen den sich kreuzenden Blechteilen der ersten und zweiten Gruppe entsteht, durch welche die Blechteile gegenseitig in ihrer Lage gehalten und zu einem verwindungssteifen Gitterrost 6 zusammengefasst sind. Für die Seitenteile des Gitterrostes 6 können beispielsweise die gleichen Blechteile 5^{I}, 5^{II} vorgesehen werden wie für den restlichen Gitterrost, wobei in diesem Fall die Blechteile seitlich vorstehen, oder es können, wie in Fig. 2B gezeigt, spezielle Seitenteile 15 aus Blech vorgesehen werden, die von aussen auf die Blechteile 5^{I}, 5^{II} aufgesetzt sind.

Fig. 2C zeigt den Gitterost 6 über einer Auflageplatte 7. Die einzelnen Blechteile 5^{I}, 5^{II} einschliesslich Seitenteile 15 des Gitterostes sind jeweils auf der der Auflageplatte zugewandten Seite mit Nocken 5a versehen, während die Auflageplatte an Stellen, an denen sich im Gitterrost Nocken befinden, Durchbrüche 7a wie beispielsweise Schlitze aufweist, in oder durch welche die Nocken 5a in zusammengebautem Zustand der Grundeinheit eingeführt oder gesteckt sind. Vorteilhafterweise sind die Blechteile 5^{I}, 5^{II}, Seitenteile 15 oder Gitterelemente der Grundeinheit senkrecht zur Auflageplatte 7 angeordnet. Die Auflageplatte ist typischerweise 4 mm bis 20 mm oder 4 mm bis 16 mm oder 6 mm bis 16 mm dick, so dass die Bearbeitung derselben beispielsweise mittels eines Lasers erfolgen kann. Fig. 2D zeigt eine Ausführungsvariante der Grundeinheit, in der die Nocken 5a auf der dem Gitterrost 6 gegenüberliegenden Seite der Auflageplatte 7 vorstehen. In einer weiteren vorteilhaften Ausführungsvariante sind die Nocken der Blechteile 5^{I}, 5^{II} einschliesslich Seitenteile 15 und/oder der Gitterelemente der Grundeinheit mittels Verriegelungselementen 8 verankert, beispielsweise mittels Keilen und/oder geraden oder konischen Bolzen und/oder Splinten. Eine derart aufgebaute Grundeinheit 6 ist in Fig. 2E gezeigt.

In einer weiteren vorteilhaften Ausführungsvariante sind der Gitterrost 6 der Grundeinheit 2 und/oder die Gittereinheiten aus Neutronen absorbierendem Material, wie beispielsweise einer Borlegierung oder Bor dotiertem Stahl, aufgebaut oder enthalten Neutronen absorbierendes Material. In einer weiteren vorteilhaften Ausführungsvariante sind der Gitterrost 6 der Grundeinheit und/oder die Gittereinheiten 3 doppelwandig ausgeführt.

Im Gitterrost 6 der Grundeinheit können Kanäle oder Aussparungen zur Aufnahme der Brennelemente ausgebildet sind. Weiter können bei Bedarf an der Auflageplatte Auflageelemente, -strukturen oder -flächen für die Brennelemente vorgesehen sein.

In einer vorteilhaften Ausführungsform umfasst die Grundeinheit 2, wie in Fig. 2F gezeigt, zusätzlich eines oder mehrere Stützelemente 10 zum Abstützen des Lagergestells. Die Stützelemente können zum Beispiel an den Nocken 5a der Blechteile 5^{I}, 5^{II}, Seitenteile 15 oder Gitterelemente der Grundeinheit ausgerichtet oder zentriert sein, und/oder bei Bedarf mit Abstützungen 10a versehen sein, beispielsweise mit verstellbaren Abstützungen in Form von Gewindebolzen, um Unebenheiten eines Lagerbeckens auszugleichen. Die Stützelemente 10 sind fallweise aus Blech oder Blechteilen geformt, wobei die seitlichen Bleche oder Blechteile der Stützelemente vorteilhafterweise auf der dem Gitterrost 6 gegenüberliegenden Seite der Auflageplatte 7 direkt unter den Blechteilen 5^{I}, 5^{II}, Seitenteilen 15 oder Gitterelementen des Gitterrostes angeordnet sind. Vorteilhafterweise sind die Stützelemente 10 an wählbaren Positionen der Auflageplatte 7 fixierbar, beispielsweise mittels Bolzen und/oder Schrauben.

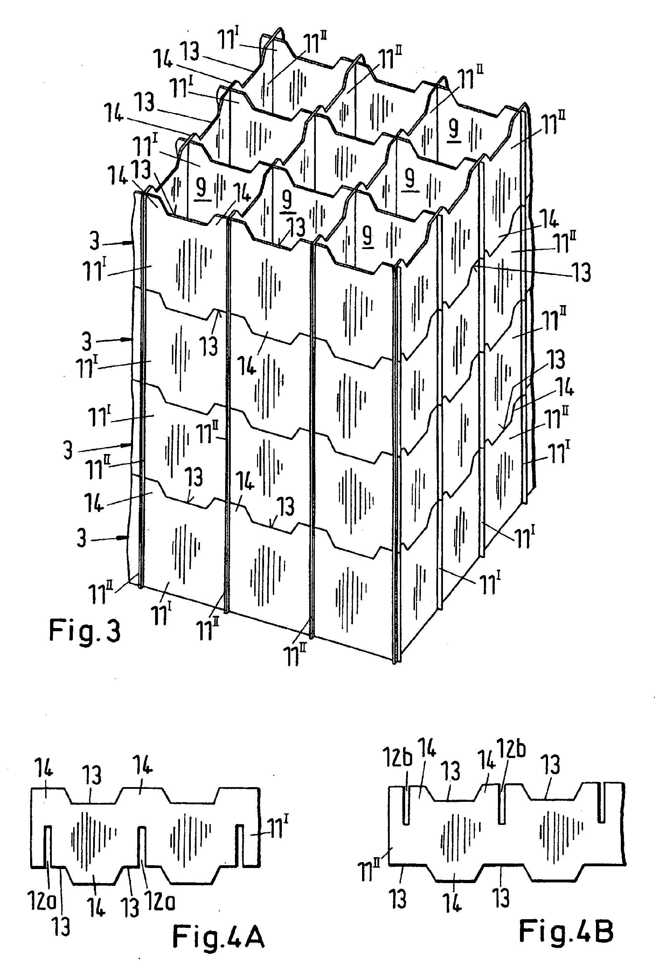

Fig. 3 zeigt einen Ausschnitt aus einem dritten Ausführungsbeispiel eines Lagergestells gemäss vorliegender Erfindung mit einer Kanalstruktur, die mehreren Gittereinheiten 3 enthält, die mit vertikalen Kanälen 9 zur Aufnahme der Brennelemente versehen sind. Die Wände der Kanäle sind durch sich kreuzende Blechteilen oder -streifen 11^{I} 11^{II} gebilde, welche in übereinander stapelbaren, formstabilen Gittereinheiten 3 angeordnet sind, die jeweils eine Montageeinheit bilden. Die Blechteile können zum Beispiel aus einem Neutronen absorbierenden Material hergestellt sein oder die Wände können ein Neutronen absorbierenden Material enthalten. In einer vorteilhaften Ausführungsvariante sind die Gittereinheiten 3 je mit mehreren an den unteren und oberen Rändern der Blechteile 11^{I}, 11^{II} ausgebildete Ausnehmungen 13 und mit mehreren vorstehenden, den Ausnehmungen der benachbarten Gittereinheiten zugeordneten Kupplungselementen 14 versehen, die so ausgebildet sind, dass bei aufeinander aufgesetzten Gittereinheiten die Kupplungselemente und die Ausnehmungen benachbarter Gittereinheiten zumindest teilweise formschlüssig ineinandergreifen. Diese Bauweise gestattet es, den Zusammenbau des Lagergestells zu mechanisieren, und ermöglicht in einfacher Weise, die Höhe des Lagergestells an die Länge der Brennelemente anzupassen.

Eine Ausführungsform einer einzelnen Gittereinheit wird im Folgenden an Hand der Figuren 3, 4A und 4B näher beschrieben. Die Gittereinheit 3 umfasst in dieser Ausführungsform zwei Gruppen von jeweils parallelen Blechteilen oder -streifen 11^{I}, 11^{II}, wobei die Blechteile der ersten Gruppe sich mit den Blechteilen der zweiten Gruppe kreuzen. Die Figuren 4A und 4B zeigen jeweils eine typische Ausführungsform der Blechteile 11^{I}, 11^{II}. Die Blechteile 11^{I} der ersten Gruppe könne zum Beispiel am unteren Rand mit Einschnitten 12a versehen sein und die Blechteile 11^{II} der zweiten Gruppe am oberen Rand mit Einschnitten 12b, so dass beim Ineinanderfügen der Einschnitte 12a und 12b eine Verbindung zwischen den sich kreuzenden Blechteilen der ersten und zweiten Gruppe entsteht, durch welche die Blechteile gegenseitig in ihrer Lage gehalten und zu einer verwindungssteifen Gittereinheit zusammengefasst sind. Für die Seitenteile der Gittereinheit 3 können beispielsweise die gleichen Blechteile 11^{I}, 11^{II} vorgesehen werden wie für die restliche Gittereinheit, wobei in diesem Fall die Blechteile, wie in Fig. 3 gezeigt, seitlich vorstehen, oder es können spezielle Seitenteile aus Blech vorgesehen werden, die von aussen auf die Blechteile 11^{I}, 11^{II} aufgesetzt sind.

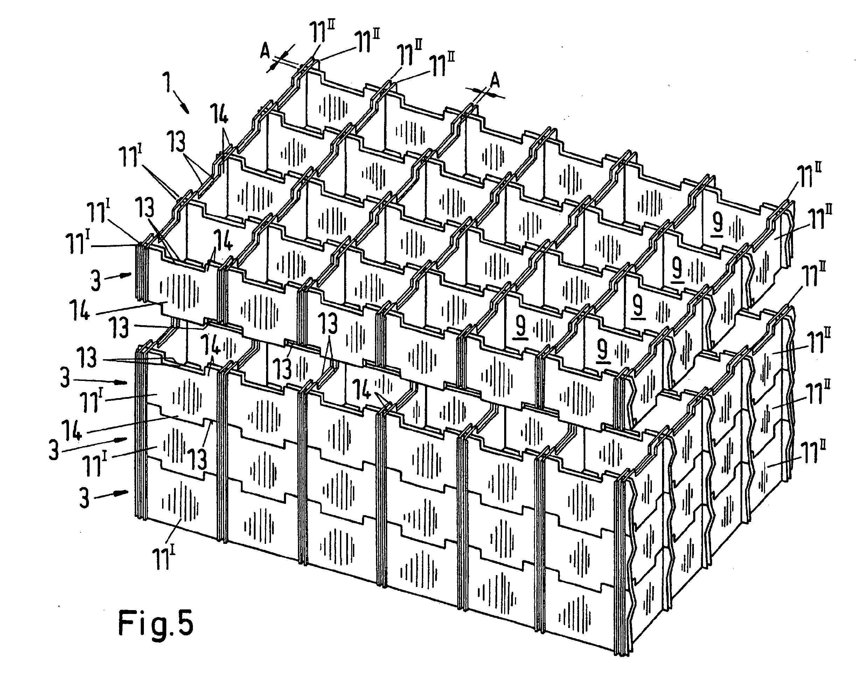

Fig. 5 zeigt einen Ausschnitt aus einem vierten Ausführungsbeispiel eines Lagergestells gemäss vorliegender Erfindung mit einer Kanalstruktur, die mehreren Gittereinheiten 3 enthält, die mit vertikalen Kanälen 9 zur Aufnahme der Brennelemente versehen sind. Die Wände der Kanäle sind durch sich kreuzende Blechteilen oder -streifen 11^{I}, 11^{II} gebilde, welche in übereinander stapelbaren, formstabilen Gittereinheiten angeordnet sind, die jeweils eine Montageeinheit bilden. Das Lagergestell des vierten Ausführungsbeispiels unterscheidet sich von dem in Fig. 3 gezeigten Lagergestell des dritten Ausführungsbeispiels lediglich dadurch, dass die Wände der Kanäle 9 als Doppelwände ausgeführt sind, d.h. dass ein Kanal durch jeweils zwei Wände, die einen Abstand A aufweisen, vom nächsten Kanal getrennt ist. Zweckmässigerweise sind in den verwendeten Blechteile 11^{I}, 11^{II} jeweils zwei nebeneinander liegende Einschnitte ausgebildet, deren Abstand dem Abstand A der Wände entspricht, so dass die Gittereinheiten entsprechend dem dritten Ausführungsbeispiel aufgebaut werden können. Die übrigen Merkmale und Ausführungsformen entsprechen denjenigen des oben beschriebenen dritten Ausführungsbeispiels, weshalb im Folgenden auf eine Wiederholung verzichtet wird.

Das beschriebene Lagergestell ermöglicht dank einer vergleichsweise dünnen Auflageplatte, die mit einer Kanalstruktur verbunden ist, erhebliche Materialeinsparungen, ohne dass die Belastbarkeit gegenüber massiveren Konstruktionen verringert wird. Damit kann die Auflageplatte das Gewicht der Brennelemente ohne zusätzliche Verstärkungen aufnehmen. Darüber hinaus kann das beschriebene Lagergestell weitgehend ohne oder ganz ohne Schweissverbindungen aufgebaut werden, wodurch die Verwendung von Neutronen absorbierender Materialien und Werkstoffen vereinfacht wird.

## Patentansprüche

1. Lagergestell zum Lagern nuklearer Brennelemente mit einer Kanalstruktur, die mehrere, vertikale nebeneinander angeordnete Kanäle (9) mit Wänden (5', 5", 11, 11', 11 ") zur Aufnahme der Brennelemente enthält, und mit einer Auflageplatte (7), die mit der Kanalstruktur verbunden ist, **dadurch gekennzeichnet, dass** die Auflageplatte (7) mit Durchbrüchen (7a) versehen ist, und dass an der Kanalstruktur vorstehende Nocken (5a) ausgebildet sind, die in oder durch die Durchbrüche (7a) der Auflageplatte gesteckt und auf der der Kanalstruktur gegenüberliegende Seite der Auflageplatte verankert sind.

2. Lagergestell nach Anspruch 1, wobei die Nocken (5a) auf der der Kanalstruktur gegenüberliegenden Seite der Auflageplatte (7) vorstehen.

3. Lagergestell nach einem der Ansprüche 1 oder 2, wobei die Nocken (5a) mittels Verriegelungselementen (8) insbesondere mittels Keilen und/oder geraden oder konischen Bolzen und/oder Splinten verankert sind.

4. Lagergestell nach einem der vorangehenden Ansprüche, wobei die Auflageplatte (7) 4 mm bis 20 mm dick, insbesondere 6 mm bis 16 mm dick ist.

5. Lagergestell nach einem der vorangehenden Ansprüche, wobei die Kanalstruktur auf der Auflageplatte (7) abgestützt ist und/oder wobei an der Auflageplatte Auflageelemente für die Brennelemente vorgesehen sind.

6. Lagergestell nach einem der vorangehen Ansprüche, wobei die Kanalstruktur und/oder die Wände (5', 5", 11, 11', 11") der Kanäle (9) aus Neutronen absorbierendem Material aufgebaut sind oder Neutronen absorbierendes Material enthalten.

7. Lagergestell nach einem der vorangehenden Ansprüche, wobei die Kanalstruktur doppelwanding ausgeführt ist.

8. Lagergestell nach einem der vorangehenden Ansprüche umfassend zusätzlich eines oder mehrere Stützelemente (10) zum Abstützen des Lagergestells und insbesondere zum Abstützen der Auflageplatte (7).

9. Lagergestell nach Anspruch 8, wobei das oder die Stützelemente (10) an den Nocken (5a) der Kanalstruktur ausgerichtet oder zentriert sind, und/oder wobei das oder die Stützelemente (10) mit Abstützungen (10a) versehen sind, insbesondere mit verstellbaren Abstützungen in Form von Gewindebolzen.

10. Lagergestell nach einem der Ansprüche 8 oder 9, wobei das oder die Stützelemente (10) aus Blech oder Blechteilen geformt sind, und wobei insbesondere die seitlichen Bleche oder Blechteile der Stützelemente auf der der Kanalstruktur gegenüberliegenden Seite der Auflageplatte (7) direkt unter den Wänden angeordnet sind.

11. Lagergestell nach einem der Ansprüche 8 bis 10, wobei das oder die Stützelemente (10) an wählbaren Positionen der Auflageplatte (7) fixierbar sind, insbesondere mittels Bolzen und /oder Schrauben fixierbar sind.

12. Lagergestell nach einem der vorangehenden Ansprüche umfassend eine Grundeinheit (2), welche die Auflageplatte (7) enthält, und eine oder mehrere, übereinander angeordnete Gittereinheiten (3, 3.1- 3.4), die auf der Grundeinheit abgestützt sind.

13. Lagergestell nach Anspruch 12, wobei die Gittereinheiten (3, 3.1- 3.4) aus Blechteilen (11', 11") aufgebaut sind, welche die Wände der Kanäle (9) bilden und/oder wobei die Grundeinheit (2) zusätzlich einen aus Blechteilen (5', 5") und/oder Gitterelementen gebildeten Gitterrost (6) umfasst.

14. Lagergestell nach einem der Ansprüche 12 oder 13, wobei die Gittereinheiten (3, 3.1-3.4) und/oder der Gitterrost (6) der Grundeinheit (2) aus Neutronen absorbierendem Material aufgebaut sind oder Neutronen absorbierendes Material enthalten.

## Claims

1. A storage rack for storing nuclear fuel elements, comprising a channel structure having plural, vertical channels (9) arranged next to each other and having walls (5^{I}, 5^{II}, 11^{I}, 11^{II}) for receiving the fuel elements, and a support plate (7) connected to the channel structure, **characterized in that** the support plate (7) is provided with openings (7a), and cams (5a) are provided protruding from the channel structure, which cams are inserted in or through the openings (7a) of the support plate and anchored on a side of the support plate which is opposite to the channel structure.

2. The storage rack according to claim 1, wherein the cams (5a) protrude from the side of the support plate (7) which is opposite to the channel structure.

3. The storage rack according to claim 1 or 2, wherein the cams (5a) are anchored by means of locking elements (8), in particular by wedges and/or straight or conical bolts and/or splints.

4. The storage rack according to any one of the preceding claims, wherein the support plate (7) has a thickness between 4 mm to 20 mm, in particular 6 mm to 16 mm.

5. The storage rack according to any one of the preceding claims, wherein the channel structure is supported on the support plate (7) and/or bearing elements are provided at the support plate for the fuel elements.

6. The storage rack according to any one of the preceding claims, wherein the channel structure and/or the walls (5^{I}, 5^{II}, 11^{I}, 11^{II}) of the channels (9) are constituted by a neutrons absorbing material or comprise a neutrons absorbing material.

7. The storage rack according to any one of the preceding claims, wherein the channel structure is double-walled.

8. The storage rack according to any one of the preceding claims, further comprising one or more support elements (10) for supporting the storage rack and in particular for supporting the support plate (7).

9. The storage rack according to claim 8, wherein the support element or the support elements (10) are aligned to or centred with respect to the cams (5a) of the channel structure and/or wherein the support element or the support elements (10) are provided with braces (10a), in particular with adjustable braces in form of threaded bolts.

10. The storage rack according to claim 8 or 9, wherein the support element or the support elements (10) are formed of sheet metal or sheet metal parts, and wherein in particular the sheet metal or the sheet metals at a side of the support elements are directly arranged below the walls on the side of the support plate (7) which is opposite to the channel structure.

11. The storage rack according to any one of claims 8 to 10, wherein the support element or the support elements (10) are fixable at selectable positions of the support plate (7), in particular by means of bolts and/or screws.

12. The storage rack according to any one of the preceding claims, comprising a basic unit (2), which comprises the support plate (7) and one or more grid units (3, 3.1- 3.4) arranged on top of each other, which are supported on the basic unit.

13. The storage rack according to claim 12, wherein the grid units (3, 3.1-3.4) are formed of sheet metal parts (11¹, 11^{II}) forming the walls of the channels (9), and /or wherein the basic unit (2) additionally comprises a grill (6) formed of metal sheet parts (5^{I}, 5^{II}) and/or of grid elements.

14. The storage rack according to claim 12 or 13, wherein the grid units (3, 3.1-3.4) and/or the grill (6) of the basic unit (2) are constituted of a neutrons absorbing material or comprise neutrons absorbing material.

## Revendications

1. Râtelier de stockage pour stocker des éléments de combustible nucléaire comprenant une structure à canaux qui contient plusieurs canaux (9) dotés de parois (5', 5", 11, 11', 11 "), disposés verticalement les uns à côté des autres, pour recevoir les éléments de combustible, et une plaque de support (7) qui est reliée à la structure à canaux, **caractérisé en ce que** la plaque de support (7) est pourvue d'ouvertures (7a) et **en ce que** des ergots (5a) en saillie sont formés sur la structure à canaux, lesquels ergots sont enfichés dans ou à travers les ouvertures (7a) de la plaque de support et sont ancrés sur le côté de la plaque de support opposé à la structure à canaux.

2. Râtelier de stockage selon la revendication 1, dans lequel les ergots (5a) font saillie sur le côté de la plaque de support (7) opposé à la structure à canaux.

3. Râtelier de stockage selon la revendication 1 ou 2, dans lequel les ergots (5a) sont ancrés au moyen d'éléments de verrouillage (8), en particulier au moyen de cales et/ou de chevilles et/ou goupilles droits ou coniques.

4. Râtelier de stockage selon l'une des revendications précédentes, dans lequel la plaque de support (7) a une épaisseur de 4 mm à 20 mm, en particulier une épaisseur de 6 mm à 16 mm.

5. Râtelier de stockage selon l'une des revendications précédentes, dans lequel la structure à canaux est appuyée sur la plaque de support (7) et/ou dans lequel des éléments de support pour les éléments de combustible sont prévus sur la plaque de support.

6. Râtelier de stockage selon l'une des revendications précédentes, dans lequel la structure à canaux et/ou les parois (5', 5", 11, 11', 11 ") des canaux (9) sont confectionnées à partir de matériau absorbant les neutrons ou contiennent du matériau absorbant les neutrons.

7. Râtelier de stockage selon l'une des revendications précédentes, dans lequel la structure à canaux est réalisée à double paroi.

8. Râtelier de stockage selon l'une des revendications précédentes comprenant en outre un ou plusieurs éléments de soutien (10) pour soutenir le râtelier de stockage et en particulier pour soutenir la plaque de support (7).

9. Râtelier de stockage selon la revendication 8, dans lequel le ou les éléments de soutien (10) sont alignés ou centrés sur les ergots (5a) de la structure à canaux et/ou dans lequel le ou les éléments de soutien (10) sont pourvu de soutiens (10a), en particulier de soutiens réglables sous la forme de boulons filetés.

10. Râtelier de stockage selon une des revendications 8 ou 9, dans lequel le ou les éléments de soutien (10) sont formés de tôle ou de pièces de tôle, et dans lequel en particulier les tôles ou pièces de tôle latérales des éléments de soutien sont disposées sur le côté de la plaque de support (7) opposé à la structure à canaux, directement en dessous des parois.

11. Râtelier de stockage selon une des revendications 8 à 10, dans lequel les éléments de soutien (10) peuvent être fixés à des endroits sélectionnables de la plaque de support (7), en particulier peuvent être fixés au moyens de boulons et/ou des vis.

12. Râtelier de stockage selon une des revendications précédentes comprenant une unité de base (2) qui contient la plaque de support (7), et une ou plusieurs unités de grille (3, 3.1,- 3.4) qui sont disposées les unes au-dessus des autres et s'appuient sur l'unité de base.

13. Râtelier de stockage selon la revendication 12, dans lequel les unités de grille (3, 3.1,- 3.4) sont confectionnées à partir de pièces de tôle (11', 11 ") qui forment les parois des canaux (9) et/ou dans lequel l'unité de base (2) comprend en outre un caillebottis (6) formé de pièces de tôle (5', 5") et/ou d'éléments de grille.

14. Râtelier de stockage selon la revendication 12 ou 13, dans lequel les unités de grille (3, 3.1,- 3.4) et/ou le caillebottis (6) de l'unité de base (2) sont confectionnés à partir de matériau absorbant les neutrons ou contiennent du matériau absorbant les neutrons.
